Europäisches Patentamt

European Patent Office

Office européen des brevets

(11) Veröffentlichungsnummer: **0 066 154**
**B1**

# EUROPÄISCHE PATENTSCHRIFT

(45) Veröffentlichungstag der Patentschrift:
**18.04.84**

(21) Anmeldenummer: **82104232.2**

(22) Anmeldetag: **14.05.82**

(51) Int. Cl.³: **F 16 F 9/52**, B 60 G 17/08

(54) **Hydraulischer Stossdämpfer mit temperaturgesteuerter Ventileinrichtung.**

(30) Priorität: **02.06.81 DE 3121915**

(43) Veröffentlichungstag der Anmeldung:
**08.12.82 Patentblatt 82/49**

(45) Bekanntmachung des Hinweises auf die Patenterteilung:
**18.04.84 Patentblatt 84/16**

(84) Benannte Vertragsstaaten:
**DE FR GB IT**

(56) Entgegenhaltungen:
**DE - A - 1 505 608
DE - A - 1 580 552
DE - A - 1 655 647
DE - A - 2 459 846
FR - A - 1 134 565
FR - A - 1 388 388
FR - A - 2 461 853
US - A - 2 592 656
US - A - 2 899 023
US - A - 2 950 785**

**PATENTS ABSTRACTS OF JAPAN, Band 4, Nr. 128, 9.
September 1980, Seite M-31-610**

(73) Patentinhaber: **Boge GmbH, Bogestrasse 50,
D-5208 Eitorf/Sieg (DE)**

(72) Erfinder: **Leibeling, Heinz, Dipl.-Ing., Antoniusweg 9,
D-5200 Siegburg-Kaldauen (DE)**
Erfinder: **Schmidt, Rudolf, Ulmenweg 9, D-5208 Eitorf
(DE)**

## Hydraulischer Stossdämpfer mit temperaturgesteuerter Ventileinrichtung

Die Erfindung betrifft einen hydraulischen Stossdämpfer mit einem an einer Kolbenstange befestigten Dämpfungskolben, der zumindest ein Drosselorgan, bestehend jeweils aus einer Drosselbohrung und einer deren Querschnitt durch gegenseitige Bewegung veränderndes Steuerelement, aufweist, wobei das bewegliche Teil des Drosselorgans von einer in einer Kammer befindlichen, bei Temperaturschwankungen volumenändernden Flüssigkeit beaufschlagt ist.

Bei derartigen Stossdämpfern wird die temperaturabhängige Viskosität und somit die Dichteänderung der Dämpfungsflüssigkeit durch ein Steuerelement, mit dem der Drosselquerschnitt in einem Drosselorgan verändert werden kann, kompensiert. Dabei wird angestrebt, über einen möglichst grossen Temperaturbereich weitestgehend konstante oder sogar überkompensierte Dämpfungskräfte zu erzeugen.

Aus dem «Patent Abstracts of Japan» Band 4, Nr. 128 (JP-A 55 86 941) ist ein nur auf Druck beanspruchter Dämpfer bekannt, der in der Kolbenstange eine zu einer Temperatursteuerung eingeschlossene Flüssigkeit aufweist.

Darüber hinaus sind Pralldämpfer bekannt (z.B. DE«A-24 59 846), bei denen zu einer Temperatursteuerung als Dehnungsorgan eine in der Kolbenstange eingeschlossene Gasfeder verwendet wird.

Dem Stand der Technik haftet der weitere Nachteil an, dass grössere Durchflussmengen, wie sie bei hohen Kolbengeschwindigkeiten entstehen, nicht temperaturabhängig geregelt werden können.

Der Erfindung liegt die Aufgabe zugrunde, die Nachteile der bekannten Stossdämpfer zu vermeiden, insbesondere eine zumindest vollständige Kompensation der Dichteänderung der Dämpfungsflüssigkeit über einen weiten Temperaturbereich auch bei grossen Durchflussquerschnitten zu gewährleisten.

Diese Aufgabe wird nach einer ersten Ausführungsform erfindungsgemäss durch die Merkmale des Kennzeichens des Anspruchs gelöst.

Eine alternative Lösung nach einer zweiten Ausführungsform ist im Kennzeichen des Anspruchs 2 angegeben.

Durch entsprechende Gestaltung der sich verändernden Querschnitte der Drosselbohrung und/oder des Drosselstiftes kann zudem eine Überkompension dergestalt erreicht werden, dass die Dämpfungskräfte zu höheren Temperaturen zu- und zu niedrigeren Temperaturen hin abnehmen. Auf diese Weise wird eine noch bessere Anpassung an den steigenden hydraulischen Dämpfungsbedarf bei höherer Zuladung bzw. auf schlechteren Strassen und umgekehrt an den abnehmenden Dämpfungsbedarf bei niedrigen Aussentemperaturen infolge zunehmender Eigendämpfung der Elastomer-Achslenkerlager verwirklicht.

Um auch bei den hohen Kolbengeschwindigkeiten eine Anpassung an Dichteänderungen der Dämpfungsflüssigkeit zu erzielen, ist für das Ventil ebenfalls ein mit dem Steuerkolben verbundenes Steuerelement vorgesehen. Dies kann beispielsweise dadurch geschehen, dass der Ventilstift eine kegelförmige Ausbildung aufweist. Durch Verbindung mit dem Steuerkolben wird der Ventilstift mehr oder weniger in die Ventilbohrung hinein- oder herausbewegt, wodurch sich der wirksame Dämpfungsquerschnitt auch bei hohen Kolbengeschwindigkeiten in der Zugstufe in Abhängigkeit von der Temperatur ändert. Die Ausbildung kann dabei konstruktiv so getroffen sein, dass untereinander die Kammer, der Steuerkolben, daran befestigt der Ventilstift und das Steuerelement, die Ventilbohrung, der Ventilteller sowie die Ventilfeder angeordnet sind.

Darüber hinaus ist vorgesehen, dass untereinander die Kammer, der Steuerkolben, daran befestigt über ein Zwischenstück der Ventilkolben mit Ventilbohrung(en), der Ventilteller, die Ventilfeder und der Anschlag mit dem daran befestigten Drosselstift angeordnet sind. Damit bei dieser Ausführungsform eine Kompensation der Dichteänderung der Dämpfungsflüssigkeit im hohen Geschwindigkeitsbereich erzielt wird, sollte das Ventil mittels der Ventilfeder in Richtung auf den beweglichen Steuerkolben verspannt sein. Hierdurch ändert sich nämlich die Vorspannung der Ventilfeder, wenn sich der in der Kammer befindliche Stoff aufgrund von Temperatureinwirkungen ausdehnt oder schrumpft.

Der bewegliche Steuerkolben wird je nach Ausführungsform entweder durch eine Feder oder durch die Ventilfeder gegen die volumenändernde Flüssigkeit gedrückt. Dynamisach sorgt zusätzlich der Öldruck dafür, dass der Steuerkolben gegen die volumenändernde Flüssigkeit gedrückt wird.

Die Erfindung sieht ferner vor, dass die Kammer einen Anschluss nach aussen zum Füllen oder Ablassen des in ihr befindlichen Stoffes aufweist. Hierdurch kann von aussen die Dämpfungs- und Kompensationscharakteristik eingestellt werden. Das gleiche lässt sich dadurch erzielen, dass der Steuerkolben verstellbar angebracht wird. Auch können Massnahmen vorgesehen sein, mit denen das Volumen der Kammer verändert werden kann.

Nach einem weiteren Merkmal der Erfindung ist vorgesehen, dass vom oberen Ende der Kolbenstange her ein mittels einer Steuereinheit beeinflussbarer Heizstab in die Kammer mit der volumenändernden Flüssigkeit hineinragt. Mit diesem Heizstab kann durch zusätzliche Erwärmung der volumenändernden Flüssigkeit eine entsprechende Dämpfungskrafterhöhung erzielt werden, beispielsweise bei schlechtem Strassenzustand, hoher Fahrzeugzuladung oder hoher Aussentemperatur.

Besonders vorteilhaft ist es, wenn die Steuereinheit als Sollwertgeber für einen Temperaturregelkreis mit einem Messfühler zur Erfassung der Temperatur in der Kammer zum Erreichen und zur Konstanthaltung der durch den Sollwertgeber vorgegebenen Temperatur ausgebildet ist. Mit Hilfe dieses Sollwertgebers kann dem Temperaturregelkreis eine bestimmte, erhöhte Temperatur vorgegeben werden, die er dann – nach Erreichen dieser Temperatur – konstant hält. Auf diese Weise besteht die Möglichkeit, schon sehr schnell eine Anpassung an erschwerte Verhältnisse, beispielsweise schlechten Strassenzustand, hohe Fahrzeugladung oder hohe Aussentemperatur, zu erreichen. Die volle Anpassung allein aufgrund der Erwärmung der volumenändernden Flüssigkeit durch die mit erhöhter Dämpfungsarbeit beaufschlagten Dämpfungsflüssigkeit nimmt nämlich eine gewisse Zeit in Anspruch, die durch die Anpassung mittels des zusätzlichen Heizstabes stark verkürzt werden kann, sofern die Temperaturvorgabe sofort bei Auftreten der erschwerten Bedingungen entsprechend erhöht wird.

Die Anpassung durch den Heizstab kann so erfolgen, dass sie der Anpassnung durch die sich langsam erwärmende Dämpfungsflüssigkeit entspricht, der Heizstab also nach Erwärmung der Dämpfungsflüssigkeit praktisch nicht mehr in Aktion tritt, so lange die erschwerten Bedingungen andauern. Es besteht jedoch auch die Möglichkeit, durch den Heizstab eine höhere Temperatur zu erzeugen, als sie sich durch den Wärmeübergang von der Dämpfungsflüssigkeit an die volumenändernde Flüssigkeit in der Kammer einstellen würde.

Zusätzlich kann vorgesehen sein, dass der Sollwertgeber einen Rechner, insbesondere einen Mikroprozessor aufweist, in den Daten über den Strassenzustand, Beladungszustand und/oder die Aussentemperatur eingebbar sind und der aufgrund dieser Daten einen Sollwert für den Temperaturregelkreis errechnet. Der Fahrer eines damit ausgestatteten Fahrzeugs kann somit beispielsweise über eine Schalttafel jeweils die passenden Informationen über die äusseren Verhältnisse in den Rechner eingeben, der dann die optimale Temperatur für die volumenändernde Flüssigkeit in den Temperaturregelkreis als Sollwert vorgibt. Aufgrund dieser Vorgabe wird dann der Heizstab eingeschaltet, bis die vorgegebene Temperatur erreicht ist. Diese wird dann konstant gehalten.

Alternativ dazu kann vorgesehen sein, dass die Oberseite der Kammer durch einen Einstellkolben abgeschlossen ist, der mittels einer Betätigungseinrichtung bewegbar ist. Mit dieser Ausführungsform wird demnach die Dämpfungskrafterhöhung nicht nur durch zusätzliche Erwärmung der in der Kammer befindlichen Flüssigkeit und damit deren Volumenausdehnung erreicht, sondern zusätzlich durch Verschiebung des Einstellkolbens mittels der Betätigungseinrichtung. Die Betätigungseinrichtung kann dabei in einfacher Weise aus einem drehbaren Gewindestift bestehen, an dem sich die Rückseite des Einstellkolbens abstützt. Dieser drehbare Gewindestift kann mit einem Hebel versehen sein, der mechanisch, hydraulisch oder pneumatisch in eine Drehbewegung versetzt werden kann.

In der Zeichnung ist die Erfindung anhand von Ausführungsbeispielen näher veranschaulicht. Es zeigen:

Fig. 1 einen ausschnittweisen Längsschnitt durch einen Teleskopstossdämpfer;

Fig. 2 einen ausschnittweisen Längsschnitt durch einen anderen Teleskopstossdämpfer;

Fig. 3 einen ausschnittweisen Längsschnitt durch den Teleskopstossdämpfer nach Fig. 1 und nach Fig. 2 mit einem Heizstab und

Fig. 4 einen Längsschnitt durch den oberen Teil der Kolbenstange eines Teleskopstossdämpfers.

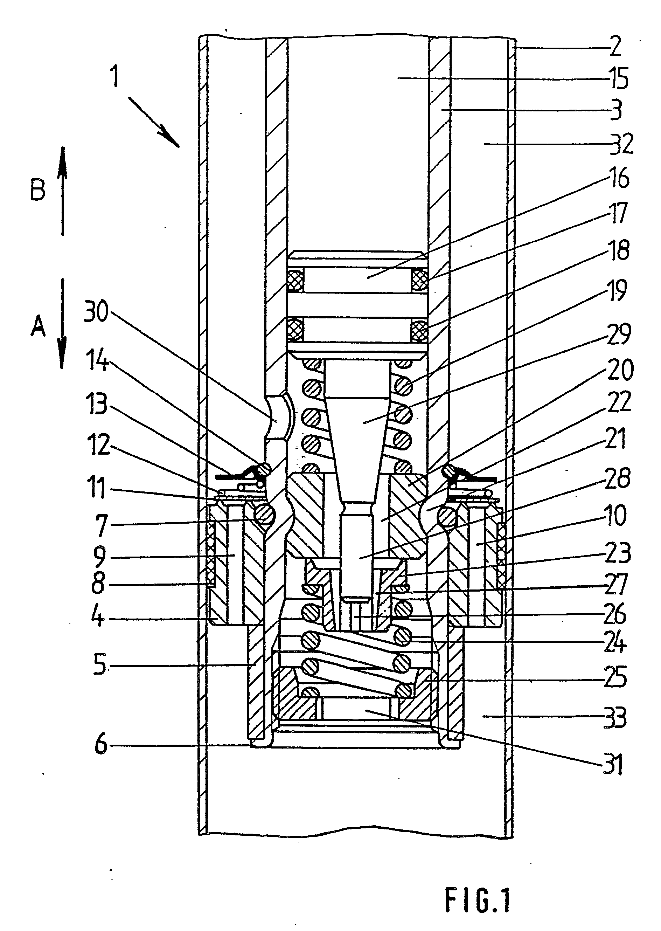

Der in Fig. 1 gezeigte Teleskopstossdämpfer 1 weist ein Zylinderrohr 2, eine darin geführte Kolbenstange 3 und einen an deren unteren Enden angeordneten Dämpfungskolben 4 auf.

Der Dämpfungskolben 4 stützt sich nach unten über einen Distanzring 5 an einem Bord 6 der Kolbenstange 3 und oben an einem in einer Sicke eingelegten Haltering 7 ab. An seinem Aussenmantel ist ein Dichtungsring 8 eingelegt. Er hat axial verlaufende Drosselkanäle 9, 10, die obenseitig durch eine Ventilplatte 11 abgedeckt sind. Diese stützt sich über eine spiralförmig gewundene Ventilfeder 12 ab, die von einer ringstegförmigen Halteplatte 13 gehalten wird, die wiederum an einem in einer Sicke in der Kolbenstange 3 eingelegten Haltering 14 abgestützt wird. Aufgrund dieser Anordnung sind die Drosselkanäle 9, 10 nur in der Druckstufe (Bewegungsrichtung Pfeil A) geöffnet und dann von Dämpfungsflüssigkeit durchflossen.

Die Kolbenstange 3 ist hohl ausgebildet. Im oberen Teil weist sie eine abgeschlossene Kammer 15 auf, in der sich eine Flüssigkeit befindet. Nach unten hin wird die Kammer durch einen Steuerkolben 16 abgeschlossen, in dessen Aussenmantel zwei Dichtungsringe 17, 18 eingelegt sind. Der Steuerkolben 16 wird mittels einer als Schraubenfeder ausgebildeten Druckfeder 19 gegen die Flüssigkeit gedrückt.

Die Druckfeder 19 stützt sich unten gegen einen Ventilring 20 ab, der über eine Sicke 21 gehalten wird. Der Ventilring 20 weist eine zylindrische Ventilbohrung 22 auf, die untenseitig durch einen Ventilteller 23 abgedeckt ist. Dieser wird durch eine ebenfalls als Schraubenfeder ausgebildete Ventilfeder 24 an die Unterseite des Ventilrings 20 gedrückt, wobei sich die Ventilfeder 24 gegen einen in die Kolbenstange 3 eingeschraubten Schraubring 25 abstützt. Durch Herein- oder Herausdrehen des Schraubrings 25 kann die Vorspannung der Vorspannfeder 24 eingestellt werden.

Im Ventilteller 23 befindet sich eine Führungsbohrung 26, die jedoch axial verlaufende Nuten 27 aufweist, die nach oben hin tiefer werden. In diese Führungsbohrung 26 ragt von oben ein zylindrischer Drosselstift 28 hinein, der die Fortsetzung eines kegelförmig sich erweiternden und mit der Ventilbohrung 22 korrespondierenden Steuerstiftes 29 ist, der wiederum am Steuerkolben 16 befestigt ist. Zwischen Steuerkolben 16 und Ventilring 20 ist in der Kolbenstange 3 eine nicht drosselnde Öffnung 30 und in dem Schraubring 25 ein Durchgangsloch 31 vorgesehen.

Der gezeigte Teleskopstossdämpfer 1 arbeitet wie folgt:

In der Druckstufe (Bewegungsrichtung Pfeil A) strömt das Dämpfungsöl einmal über die Drosselkanäle 9, 10 im Dämpfungskolben 4 und einmal über das Durchgangsloch 31, die Nuten 27, die Ventilbohrung 22 und die Öffnung 30 in den oberen Raum 32. Die Drosselwirkung der Nuten 27 ist dabei abhängig von der jeweiligen Stellung des Drosselstiftes 28. Diese wiederum wird durch das Volumen der Flüssigkeit in der Kammer 15 bestimmt. Vergrössert sich das Volumen aufgrund einer Erwärmung der Dämpfungsflüssigkeit und damit auch der Flüssigkeit in der Kammer 15, so wird der Steuerkolben 16 nach unten gedrückt. Der Drosselstift 28 dringt dann tiefer in die Drosselbohrung 26 ein, wodurch sich der wirksame Durchflussquerschnitt wegen der in dieser Richtung abnehmenden Tiefe der Nuten 27 verengt. Dabei können die Nuten so gestaltet sein, dass die Dämpfungskräfte trotz geringerer Dichte der Dämpfungsflüssigkeit zumindest konstant bleiben, erforderlichenfalls sogar grösser werden, um den steigenden hydraulischen Dämpfungsbedarf bei hoher Zuladung oder schlechter Strasse Rechnung zu tragen. In der Zugstufe (Bewegungsrichtung Pfeil B) fliesst die Dämpfungsflüssigkeit bei niedrigen Dämpfungskolbengeschwindigkeiten umgekehrt über die Öffnung 30, die Ventilbohrung 22, die Nuten 27 und das Durchgangsloch 31 in den unteren Raum 33. Auch hier wirken die Nuten 27 dämpfend, wobei der wirksame Dämpfungsquerschnitt von der jeweiligen Stellung des Drosselstiftes 28 bestimmt wird. Da diese Stellung – wie beschrieben – von der jeweiligen Temperatur der Flüssigkeit in der Kammer 15 bestimmt wird, wird auch in der Zugstufe eine Kompensation der Dichteänderung bei der Dämpfungsflüssigkeit erzielt.

Bei mittleren und hohen Dämpfungskolbengeschwindigkeiten hebt der Ventilteller 23 aufgrund des zunehmenden Volumenstroms vom Ventilring 20 ab, so dass über den sich dann ergebenden Ringspalt ein Teil der Dämpfungsflüssigkeit nach unten fliessen kann. Aufgrund des grossen Volumenstroms wirkt dann der Ventilstift 29 als Steuerelement zur Kompensation der Dichteänderung bei der Dämpfungsflüssigkeit. Bei Erhöhung der Temperatur der Flüssigkeit in der Kammer 15 wird nämlich der Ventilstift 29 weiter in die Ventilbohrung 22 hineinbewegt, so dass sich der freie Querschnitt an deren oberen Rand verringert, wodurch die Dämpfungskräfte trotz Verringerung der Dichte der Dämpfungsflüssigkeit gleich bleiben. Bei entsprechender Auslegung des Kegels des Ventilstiftes 29 kann sogar erzielt werden, dass die Dämpfungskräfte zu höheren Temperaturen hin zu- und zu niedrigeren Temperaturen hin abnehmen.

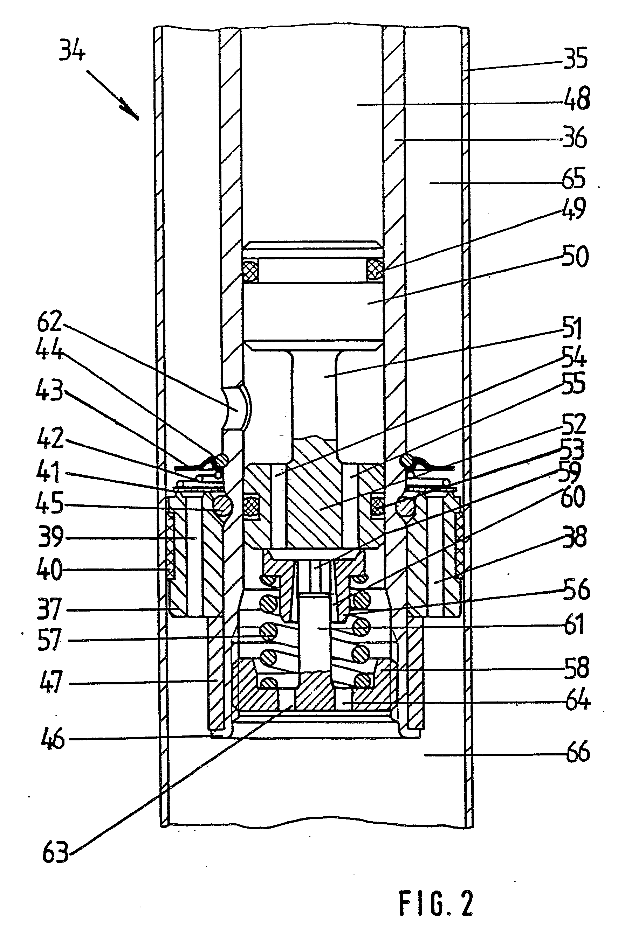

Fig. 2 zeigt eine abgewandelte Ausführungsform des Teleskop-Stossdämpfers 1 nach Fig. 1.

Der hier dargestellte Teleskop-Stossdämpfer 34 hat ein Zylinderrohr 35, eine Kolbenstange 36 und einen Dämpfungskolben 37. Der Dämpfungskolben 37 ist mit dem in Fig. 1 gezeigten identisch, weist also Drosselkanäle 38, 39, einen Dichtungsring 40 und eine obere Ventilplatte 41 auf, die über die Ventilfeder 42 eine Halteplatte 43 und einen Haltering 44 gehalten ist. Verspannt ist der Dämpfungskolben 37 zwischen einem Befestigungsring 45 und einem sich an einem Bord 46 abstützenden Distanzring 47.

Die Kolbenstange 36 schliesst hier ebenfalls eine Kammer 48 ein, die mit einer Flüssigkeit gefüllt ist. Gegen die Flüssigkeit wird ein mit einem Dichtungsring 49 versehener Steuerkolben 50 gedrückt, der sich nach unten in einem Zwischenstück 51 geringeren Durchmessers fortsetzt, an dem ein Ventilkolben 52 angeformt ist. An dessen Aussenseite ist ebenfalls ein Dichtungsring 53 vorgesehen.

In den Ventilkolben 52 sind Ventilbohrungen 54, 55 angeordnet. Nach unten hin werden sie von einem Ventilteller 56 abgedeckt. Gegen den Ventilteller 56 drückt von unten eine Ventilfeder 57, die sich gegen einen Schraubring 58 abstützt. Auf diese Weise wird das ganze System, bestehend aus Ventilteller 56, Ventilkolben 52, Zwischenstück 51 und Steuerkolben 50 gegen die Flüssigkeit in der Kammer 48 gedrückt.

In dem Ventilteller 56 befindet sich eine Führungsbohrung 59 mit axialen Nuten 60, deren Tiefe sich nach unten vergrössert. Von unten ragt ein am Schraubring 58 befestigter, zylinderförmiger Drosselstift 61 herein. Über eine Öffnung 62 zwischen Steuerkolben 50 und Ventilkolben 52 sowie über Durchgangslöcher 63, 64 in dem Schraubring 58 kann die Dämpfungsflüssigkeit vom oberen Raum 65 in den unteren Raum 66 und umgekehrt strömen.

In der Druckstufe sind im wesentlichen die gleichen Verhältnisse wie bei dem Teleskopstossdämpfer 1 nach Fig. 1 gegeben. Bei sich verändernder Temperatur wird das System Steuerkolben 50, Zwischenstück 51, Ventilkolben 52 und Ventilteller 56 nach unten gedrückt, so dass sich der Ventilteller 56 weiter über den Drosselstift 61 senkt. Da hierdurch der wirksame Querschnitt in den Drosselnuten 60 verringert wird, tritt eine Kompensation der Dichteänderung der Dämpfungsflüssigkeit aufgrund ihrer Erwärmung ein.

In der Zugstufe geht der Durchfluss bei niedrigen Dämpfungskolbengeschwindigkeiten und damit niedrigem Volumenstrom über die Öffnung 62, die Ventilbohrungen 54, 55, die Drosselnuten 60 und die Durchgangslöcher 63, 64. Auch hier wirken die Drosselnuten 60 dämpfend, wobei Dichteänderungen der Dämpfungsflüssigkeit durch die jeweilige Stellung des Drosselstiftes 61 im Verhältnis zu den Drosselnuten 60 kompensiert werden.

Bei mittleren und hohen Dämpfungskolbengeschwindigkeiten hebt hier ebenfalls der Ventilteller 56 ab. Die sich dabei einstellenden Durchflussquerschnitte werden durch die Vorspannung der Ventilfeder 57 bestimmt. Diese ändert sich mit dem Volumen der Flüssigkeit in der Kammer 48, da hierdurch das System Steuerkolben 50, Zwischenstück 51, Ventilkolben 52 und Ventilteller 56 entsprechend nach oben oder unten bewegt wird, die Vorspannung sich also erniedrigt oder erhöht. Auf diese Weise ist auch eine Kompensation der Dichteänderung der Dämpfungsflüssigkeit im mittleren und niedrigen Geschwindigkeitsbereich gegeben, wobei durch entsprechende Auslegung auch eine Überkompensation erzielt werden kann.

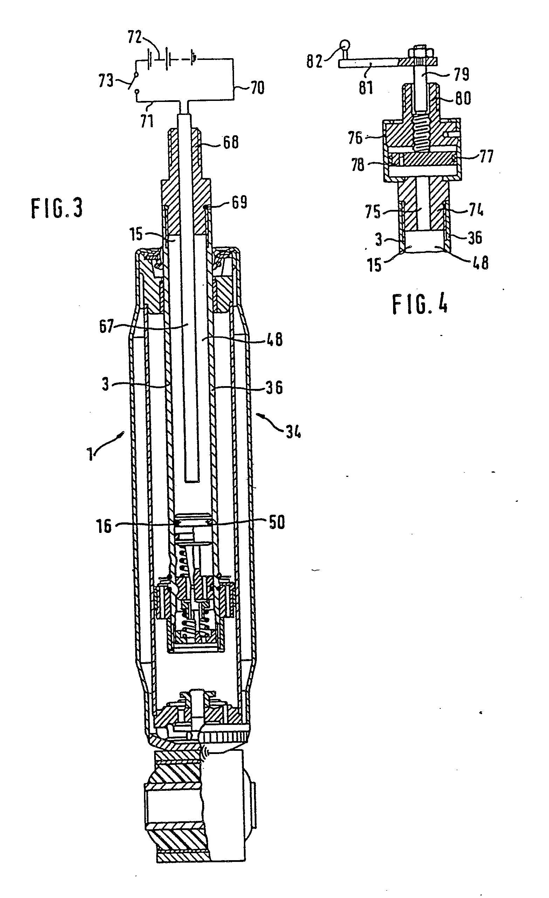

Fig. 3 zeigt einen Teleskopstossdämpfer im Längsschnitt, dessen linke Hälfte dem Teleskopstossdämpfer 1 in Fig. 1 und dessen rechte Hälfte dem Teleskopstossdämpfer 34 in Fig. 2 entspricht, so dass hinsichtlich der übereinstimmenden Merkmale auf die dortige Beschreibung Bezug genommen wird.

In die von der Kolbenstange 3, 36 eingeschlossene Kammer 15, 48, die mit einer volumenändernden Flüssigkeit gefüllt ist, ragt vom oberen Ende her ein tauchsiederartiger Heizstab 67 hinein. Dieser Heizstab 67 ist in ein oberes Abschlussteil 68 eingelötet, das in das obere Ende der Kolbenstange 3, 36 eingeschraubt ist, wobei ein O-Ring 69 die Abdichtung übernimmt.

Das obere Ende des Heizstabes 67 ist mit Stromleitungen 70, 71 verbunden, die an einer Batterie 72 angeschlossen sind, wobei der Stromkreis mittels eines Schalters 73 unterbrochen bzw. geschlossen werden kann. Bei Einschaltung des elektrischen Stroms wird die in der Kammer 15, 48 befindliche Flüssigkeit durch den Heizstab 67 erwärmt und dehnt sich aus. Hierdurch wird der Steuerkolben 16, 50 nach unten gedrückt, wobei durch die besondere, oben schon beschriebene Ventilausbildung höhere Dämpfungskräfte erzeugt werden.

Der Schalter 73 kann in einem hier nicht näher dargestellten Temperaturregelkreis integriert sein, der einen Messfühler zur Ermittlung der jeweiligen Temperatur in der Kammer 15, 48 aufweist. Ergibt der Vergleich eines vorgegebenen Sollwertes für diese Temperatur mit dem tatsächlichen, durch den Messfühler ermittelten Wert, dass letzterer zu niedrig ist, so wird der Schalter 73 so lange geschlossen, bis der tatsächliche Temperaturwert den Sollwert erreicht hat. Die Temperatur wird dann konstant gehalten. Die Sollwertvorgabe kann von Hand durch entsprechende Sollwertgeber erfolgen. Sollen dabei jedoch mehrere Informationen verwertet werden, so empfiehlt es sich, einen Rechner zwischenzuschalten, der die Informationen entsprechend ihrer Wertigkeit verarbeitet und so eine optimale Temperaturvorgabe ausrechnet.

Fig. 4 zeigt das obere Ende derselben Kolbenstange 3, 36, wie sie in Fig. 3 dargestellt ist. Statt eines Heizstabes weist das obere Abschlussteil 74 eine Bohrung 75 auf, die in einen Topf 76 führt. In diesem Topf 76 ist ein mit einem O-Ring abgedichteter Einstellkolben 78 angeordnet, der mit seiner Unterseite an der in der Kammer 15, 48 befindlichen Flüssigkeit anliegt.

Die Oberseite des Einstellkolbens 78 stützt sich an einem Gewindestift 79 ab, der im Deckel 80 des Topfs 76 drehbar gelagert ist. Das obere Ende des Gewindestifts 79 ist mit einem Hebel 81 verbunden, an dessen äusserem Ende ein Kugelkopf 82 angeordnet ist. Dieser kann mit einem Gestänge verbunden werden, damit in den Hebel 81 mechanisch, hydraulisch oder pneumatisch eine Schwenkbewegung eingeleitet wird, die den Gewindestift 79 entsprechend dessen Steigung nach unten bewegt. Hierdurch wird auch der Einstellkolben 78 nach unten gedrückt und bewirkt über die Flüssigkeitssäule eine Axialbewegung des in Fig. 3 gezeigten Steuerkolbens 16, 50. Hierdurch werden aufgrund der besonderen Ventilausbildung höhere Dämpfungskräfte erzeugt.

**Patentansprüche**

1. Hydraulischer Stossdämpfer (1, 34) mit einem an einer Kolbenstange (3, 36) befestigten Dämpfungskolben (4, 37), der zumindest ein Drosselorgan, bestehend jeweils aus einer Drosselbohrung (26, 59) und einem deren Querschnitt durch gegenseitige Bewegung veränderndes Steuerelement (28, 61), aufweist, wobei das bewegliche Teil (28, 59) des Drosselorgans von einer in einer Kammer (15, 48) befindlichen, bei Temperaturschwankungen volumenändernden Flüssigkeit beaufschlagt ist, wobei die Kammer (15, 48) als Hohlraum in der Kolbenstange (3, 36) ausgebildet ist, dessen unteres Ende von einem mit dem jeweils beweglichen Teil (28, 59) des Drosselorgans verbundenen, beweglichen Steuerkolben (16, 50) abgeschlossen ist, wobei das Drosselorgan jeweils aus einer Drosselbohrung (26, 59) und einem in diese hineinragenden Drosselstift (28, 61) besteht und die Drosselbohrung (26, 59) und/oder der Drosselstift (28, 61) in axialer Richtung sich verändernde Querschnitte aufweisen und einer der beiden Teile (28, 59) das mit dem Steuerkolben (16, 50) bewegbare Steuerelement bildet, dadurch gekennzeichnet, dass die sich verändernden Querschnitte zwischen Drosselbohrung (26, 59) und Drosselstift (28, 61) für niedrige Kolbengeschwindigkeiten ausgelegt sind und die Drosselbohrung (26, 59) in einem Ventilteller (23, 56) angeordnet ist, der sich bei höheren Kolbengeschwindigkeiten in der Zugstufe gegen die Wirkung einer sich an einen gegebenenfalls verstellbaren Anschlag (25, 58) abstützenden Ventilfeder (24, 57) öffnet, wobei der Ventilteller zumindest eine Ventilbohrung (22) abdeckt, in die ein Ventilstift (29) hineinragt, wobei Ventilbohrung (22) und/oder Ventilstift (29) sich in axialer Richtung verändernde Querschnitte aufweisen und der Ventilstift (29) mit dem Steuerkolben (16) verbunden ist.

2. Hydraulischer Stossdämpfer (1, 34) mit einem an einer Kolbenstange (3, 36) befestigten Dämpfungskolben (4, 37), der zumindest ein Drosselorgan, bestehend jeweils aus einer Drosselbohrung (26, 59) und einem deren Querschnitt durch gegenseitige Bewegung veränderndes Steuerelement (28, 61), aufweist, wobei das bewegliche Teil (28, 56) des Drosselorgans von einer in einer Kammer (15, 48) befindlichen, bei Temperaturschwankungen volumenändernden Flüssigkeit beaufschlagt ist, wobei die Kammer (15, 48) als Hohlraum in der Kolbenstange (3, 36) ausgebildet ist, dessen unteres Ende von einem mit dem jeweils beweglichen Teil (28, 59) des Drosselorgans verbundenen, beweglichen Steuerkolben (16, 50) abgeschlossen ist, wobei das Drosselorgan jeweils aus einer Drosselbohrung (26, 59) und einem in diese hineinragenden Drosselstift (28, 61) besteht und die Drosselbohrung (26, 59) und/oder der Drosselstift (28, 61) in axialer Richtung sich verändernde Querschnitte aufweisen und einer der beiden Teile (28, 59) das mit dem Steuerkolben (16, 50) bewegbare Steuerelement bildet, dadurch gekennzeichnet, dass die sich verändernden Querschnitte zwischen Drosselbohrung (26, 59) und Drosselstift (28, 61) für niedrige Kolbengeschwindigkeiten ausgelegt sind und die Drosselbohrung (26, 59) in einem Ventilteller (23, 56) angeordnet ist, der sich bei höheren Kolbengeschwindigkeiten in der Zugstufe gegen die Wirkung einer sich an einen gegebenenfalls verstellbaren Anschlag (25, 58) abstützenden Ventilfeder (24, 57) öffnet, und dass der Ventilteller (56) zumindest eine Ventilbohrung (54, 55) abdeckt, die in einem Ventilkolben (52) angeordnet ist, der mit dem Steuerkolben (50) verbunden ist.

3. Stossdämpfer nach Anspruch 1 oder 2, dadurch gekennzeichnet, dass die sich verändernden Querschnitte durch axial sich verbreiternde und/oder vertiefende Nuten (27, 60) gebildet sind und der Drosselstift (28, 61) in der Drosselbohrung (26, 59) geführt wird.

4. Stossdämpfer nach Anspruch 1 oder 2 oder 3, dadurch gekennzeichnet, dass die sich verändernden Querschnitte zur Erzeugung einer Überkompensation derart ausgebildet sind, dass die Dämpfungskräfte zu höheren Temperaturen hin zu- und zu niedrigen Temperaturen hin abnehmen.

5. Stossdämpfer nach Anspruch 1, dadurch gekennzeichnet, dass der Ventilstift (29) kegelförmig ausgebildet ist.

6. Stossdämpfer nach Anspruch 1, dadurch gekennzeichnet, dass untereinander die Kammer (15), der Steuerkolben (16), daran befestigt der Ventilstift (29) und der Drosselstift (28), die Ventilbohrung (26), der Ventilteller (23) sowie die Ventilfeder (24) angeordnet sind.

7. Stossdämpfer nach Anspruch 2, dadurch gekennzeichnet, das untereinander die Kammer (48), der Steuerkolben (50), daran befestigt über ein Zwischenstück der Ventilkolben (52) mit Ventilbohrung(en) (54, 55), der Ventilteller (56), die Ventilfeder (57) und der Anschlag (58) mit dem daran befestigten Drosselstift (61) angeordnet sind.

8. Stossdämpfer nach einem der Ansprüche 1 bis 7, dadurch gekennzeichnet, dass der Steuerkolben (16, 50) mittels einer Feder (19, 57) gegen die Flüssigkeit in der Kammer (15, 48) gedrückt ist.

9. Stossdämpfer nach einem der Ansprüche 1 bis 8, dadurch gekennzeichnet, dass vom oberen Ende der Kolbenstange (3, 36) her ein mittels einer Steuereinheit beeinflussbarer Heizstab (67) in die Kammer (15, 48) hineinragt.

10. Stossdämpfer nach Anspruch 9, dadurch gekennzeichnet, dass die Steuereinheit als Sollwertgeber für einen Temperaturregelkreis mit einem Messfühler zur Erfassung der Temperatur in der Kammer (15, 48) zum Erreichen und zur Konstanthaltung der durch den Sollwertgeber vorgegebenen Temperatur ausgebildet ist.

11. Stossdämpfer nach Anspruch 10, dadurch gekennzeichnet, dass der Sollwertgeber einen Rechner, insbesondere einen Mikroprozessor, aufweist, in den Daten über den Strassenzustand, Beladungszustand und/oder die Aussentemperatur eingebbar sind und der aufgrund dieser Daten einen Sollwert für den Temperaturregelkreis errechnet.

12. Stossdämpfer nach einem der Ansprüche 1 bis 8, dadurch gekennzeichnet, dass die Oberseite der Kammer (15, 48) durch einen Einstellkolben (78) abgeschlossen ist, der mittels einer Betätigungseinrichtung bewegbar ist.

13. Stossdämpfer nach Anspruch 12, dadurch gekennzeichnet, dass die Betätigungseinrichtung aus einem drehbaren Gewindestift (79) besteht, an dem sich die Rückseite des Einstellkolbens (78) abstützt.

**Claims**

1. Hydraulic shock absorber (1, 34) with a main piston (4, 37) which is secured to a piston rod (3, 36) and has at least one restriction device comprising respectively a throttle bore (26, 59) and a control element (28, 61) which varies the cross section of the bore by relative movement, the moving component (28, 59) of the restriction device being acted upon by a fluid which varies in volume with temperature changes and is present in a chamber (15, 48), the chamber (15, 48) being in the form of a cavity in the piston rod (3, 36) of which the lower end is closed off by a displaceable control piston (16, 50) connected to the respective moving component (28, 59) of the restriction device, the restriction device comprising respectively a throttle bore (26, 59) and a throttle pin (28, 61) projecting into the bore, and the throttle bore (26, 59) and/or the pin (28, 61) having a cross section which varies axially and one of the two components (28, 59) forming the control element displaceable with the control piston (16, 50), characterised in that the varying cross sections between the throttle bore (26, 59) and the pin (28, 61) are designed for low piston velocities and the throttle bore (26, 59) is arranged in a valve member (23, 56) which, at high piston velocities in the extension phase opens against the action of a valve spring (24, 57) abutting against a stop (25, 58), which may be adjustable, the valve member closing off at least one valve orifice (22) into which a pin (29) projects, the orifice (22) and/or the pin (29) having an axially varying cross section and the pin (29) being connected to the control piston (16).

2. Hydraulic shock absorber (1, 34) with a main piston (4, 37) which is secured to a piston rod (3, 36) and has at least one restriction device comprising respectively a throttle bore (26, 59) and a control element (28, 61) which varies the cross section of the bore by relative movement, the moving component (28, 56) of the restriction device being acted upon by a fluid which varies in volume with temperature changes and is present in a chamber (15, 48), the chamber (15, 48) being in the form of a cavity in the piston rod (3, 36) of which the lower end is closed off by a displaceable control piston (16, 50) connected to the respective moving component (28, 59) of the restriction device, the restriction device comprising respectively a throttle bore (26, 59) and a throttle pin (28, 61) projecting into the bore and the throttle bore (26, 59) and/or the pin (28, 61) having a cross section which varies axially and one of the two components (28, 59) forming the control element displaceable with the control piston (16, 50), characterised in that the varying cross sections between the throttle bore (26, 59) and the pin (28, 61) are designed for low piston velocities and the throttle bore (26, 59) is arranged in a valve member (23, 56) which at high piston velocities in the extension phase opens against the action of a valve spring (24, 57) abutting against a stop (25, 58) which may be adjustable, and that the valve member (56) closes off at least one valve orifice (54, 55) which is arranged in a valve piston (52) connected to the control piston (50).

3. Shock absorber according to claim 1 or 2, characterised in that, the varying cross sections are formed by axially divergent and/or increasing-depth grooves (27, 60) and the throttle pin (28, 61) is guided in the throttle bore (26, 59).

4. Shock absorber according to claim 1 or 2 or 3, characterised in that, to achieve over-compensation, the varying cross sections are formed in such a way that the damping forces rise with increasing temperatures and fall with lower temperatures.

5. Shock absorber according to claim 1, characterised in that, the valve pin (29) is of frusto-conical shape.

6. Shock absorber according to claim 1, characterised in that, under one another are arranged the chamber (15), the control piston (16), secured to it the valve pin (29) and the throttle pin (28), the valve orifice (26), the valve member (23) and the valve spring (24).

7. Shock absorber according to claim 2, characterised in that, below one another are arranged the chamber (48), the control piston (50), secured to it through an intermediate member the valve piston (52) with valve orifice(s) (54, 55), the valve member (56) the valve spring (57) and the stop (58) with the throttle pin (61) attached to it.

8. Shock absorber according to one of claims 1 to 7, characterised in that, the control piston (16, 50) is urged against the fluid in the chamber (15, 48) by means of a spring (19, 57).

9. Shock absorber according to one of claims 1 to 8, characterised in that, a rod-like heater (67) acted on by means of a control unit extends from the upper end of the piston rod (3, 36) into the cavity (15, 48).

10. Shock absorber according to claim 9, characterised in that, the control unit is formed as desired value setting means for a temperature control circuit with a sensor for ascertaining the temperature in the cavity (15, 48), for achieving and maintaining constant the temperature predetermined by the desired value setting means.

11. Shock absorber according to claim 10, characterised in that, the desired value setting means comprise a computer, in particular a microprocessor, into which are fed the data over the road condition, load condition and/or the outside temperature and which computes a desired value for the temperature control circuit on the basis of these data.

12. Shock absorber according to one of claims 1 to 8, characterised in that, the upper end of the cavity (15, 48) is closed off by an adjustable piston (78) which is moved by means of an actuating device.

13. Shock absorber according to claim 12, characterised in that, the actuating device comprises a rotatable screw-threaded pin (79) against which the rear face of the adjustable piston (78) engages.

**Revendications**

1. Amortisseur hydraulique (1, 34) avec un piston d'amortissement (4, 37) fixé sur une tige (3, 36) et comportant au moins un étrangleur constitué par un étranglement (26, 59) et un élément de commande (28, 61) faisant varier la section de l'étranglement par un mouvement relatif, la partie mobile (28, 59) de l'étrangleur étant chargée par un liquide contenu dans une chambre (15, 48) et dont les fluctuations de température font varier le volume; la chambre (15, 48) étant réalisée sous forme d'une cavité dans la tige (3, 36) de piston, dont l'extrémité inférieure est fermée par un piston (16, 50) de commande mobile, relié à la partie mobile (28, 59) de l'étrangleur qui est constitué par un étranglement (28, 61), pour de faibles vitesses de piston, et l'étranglement (26, 59) et une broche d'étranglement (28, 61) pénétrant dans ce dernier; et l'étranglement (25, 59) et/ou la broche d'étranglement (28, 61) présentant des sections variables axialement, et une des deux pièces (28, 59) constituant l'élément de commande mobile avec le piston de commande (16, 50), ledit amortisseur étant caractérisé en ce que les sections variables sont dimensionnées, entre l'étranglement (28, 61), pour de faibles vitesses de piston, et l'étranglement (26, 59) et la broche d'étranglement (26, 59) est disposé dans une tête (23, 56) de soupape qui, aux vitesses élevées du piston pendant la phase de traction, s'ouvre contre l'action d'un ressort (24, 57) de soupape prenant appui sur une butée (25, 58) réglable le cas échéant, ladite tête de soupape couvrant au moins un alésage (22) de soupape dans lequel pénètre une broche (29) de soupape, l'alésage (22) et/ou la broche (29) de soupape présentant des sections variables axialement et la broche (29) de soupape étant reliée au piston de commande (16).

2. Amortisseur hydraulique (1, 34) avec un piston d'amortissement (4, 37) fixé sur une tige (3, 36) et comportant au moins un étrangleur constitué par un étranglement (26, 59) et un élément de commande (28, 61) faisant varier la section de l'étranglement par un mouvement relatif, la partie mobile (28, 56) de l'étrangleur étant chargée par un liquide contenu dans une chambre (15, 48) et dont les fluctuations de température font varier le volume; la chambre (15, 48) étant réalisée sous forme d'une cavité dans la tige (3, 36) de piston, dont l'extrémité inférieure est fermée par un piston de commande (16, 50) mobile, relié à la partie mobile (28, 59) de l'étrangleur, qui est constitué par un étranglement (26, 59) et une broche d'étranglement (28, 61) pénétrant dans ce dernier; et l'étranglement (26, 59) et/ou la broche d'étranglement (28, 61) présentent des sections variables axialement, et une des deux pièces (28, 59) constituant l'élément de commande mobile avec le piston de commande (16, 50), ledit amortisseur étant caractérisé en ce que les sections variables sont dimensionnées, entre l'étranglement (26, 59) et la broche d'étranglement (28, 61), pour de faibles vitesses du piston; l'étranglement (26, 59) est disposé dans une tête (23, 56) de soupape qui, aux vitesses élevées du piston pendant la phase de traction, s'ouvre contre l'action d'un ressort (24, 57) de soupape prenant appui sur une butée (25, 58) réglable le cas échéant; et la tête (56) de soupape couvre au moins un alésage (54, 55) d'un piston (52) de soupape relié au piston de commande (50).

3. Amortisseur selon une des revendications 1 ou 2, caractérisé en ce que les sections variables sont constituées par des gorges axiales (27, 60) qui s'élargissent et/ou s'approfondissent axialement; et la broche d'étranglement (28, 61) est guidé dans l'étranglement (26, 59).

4. Amortisseur selon une quelconque des revendications 1 à 3, caractérisé en ce que les sections variables destinées à produire une surcompensation sont réalisées de façon que les forces d'amortissement augmentent vers les températures élevées et diminuent vers les basses températures.

5. Amortisseur selon revendication 1, caractérisé par une réalisation conique de la broche (29) de soupape.

6. Amortisseur selon revendication 1, caractérisé en ce que la chambre (15), le piston de commande (16), la broche (29) de soupape et la broche d'étranglement (28) fixées sur ce dernier, l'alésage (26) de soupape, la tête (23) de soupape et le ressort (24) de soupape sont disposés l'un au-dessous de l'autre.

7. Amortisseur selon revendication 2, caractérisé en ce que la chambre (48), le piston de commande (50), le piston (52) de soupape fixé sur ce dernier par une pièce intermédiaire et présentant un ou des alésages (54, 55) de soupape, la tête (56) de soupape, le ressort (57) de soupape et la butée (58) sur laquelle est fixée la broche d'étranglement (61) sont disposés l'un au-dessous de l'autre.

8. Amortisseur selon une quelconque des revendications 1 à 7, caractérisé en ce qu'un ressort (19, 57) repousse le piston de commande (16, 50) contre le liquide contenu dans la chambre (15, 48).

9. Amortisseur selon une quelconque des revendications 1 à 8, caractérisé en ce qu'un barreau chauffant (67), influencé par une unité de commande, pénètre dans la chambre (15, 48) par l'extrémité supérieure de la tige (3, 36) de piston.

10. Amortisseur selon revendication 9, caractérisé en ce que l'unité de commande est réalisée sous forme d'un émetteur de valeur de consigne pour une boucle de régulation de température comportant un capteur pour détermination de la température dans la chambre (15, 48), afin d'établir puis de stabiliser la température affichée par l'émetteur de valeur de consigne.

11. Amortisseur selon revendication 10, caractérisé en ce que l'émetteur de valeur de consigne comporte un calculateur, et en particulier un microprocesseur, dans lequel sont introduites les données relatives à l'état de la chaussée, à la charge et/ou à la température extérieure, et qui à l'aide de ces données calcule une valeur de consigne pour la boucle de régulation de température.

12. Amortisseur selon une quelconque des revendications 1 à 8, caractérisé en ce que la face supérieure de la chambre (15, 48) est fermée par un piston de réglage (78), qui est déplacé par un dispositif de manœuvre.

13. Amortisseur selon revendication 12, caractérisé en ce que le dispositif de manœuvre est constitué par une tige filetée (79), tournante, sur laquelle prend appui la face arrière du piston de réglage (78).

FIG.1

FIG. 2

FIG. 3

FIG. 4